(19) Europäisches Patentamt
European Patent Office
Office européen des brevets

(11) EP 0 458 164 B1

(12) EUROPÄISCHE PATENTSCHRIFT

(45) Veröffentlichungstag und Bekanntmachung des Hinweises auf die Patenterteilung:
**04.12.1996 Patentblatt 1996/49**

(51) Int Cl.[6]: **C08F 8/00**, C08F 8/14, C08F 8/32

(21) Anmeldenummer: **91107745.1**

(22) Anmeldetag: **14.05.1991**

(54) **Kunstharze**

Synthetic resins

Résines synthétiques

(84) Benannte Vertragsstaaten:
**AT BE DE ES FR GB IT NL SE**

(30) Priorität: **23.05.1990 DE 4016549**

(43) Veröffentlichungstag der Anmeldung:
**27.11.1991 Patentblatt 1991/48**

(73) Patentinhaber: **BASF Aktiengesellschaft**
**67063 Ludwigshafen (DE)**

(72) Erfinder:
- **Rehmer, Gerd, Dr.**
  **W-6711 Beindersheim (DE)**
- **Auchter, Gerhard, Dr.**
  **W-6702 Bad Duerkheim (DE)**
- **Jaeger, Helmut**
  **W-6719 Bobenheim (DE)**

(56) Entgegenhaltungen:
**EP-A- 0 291 662**
**EP-A- 0 346 788**
**EP-A- 0 355 892**
**DE-A- 2 045 985**
**FR-A- 2 009 112**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 458 164 B1

**Beschreibung**

Die vorliegende Erfindung betrifft die Verwendung von Kunstharzen, welche dadurch erhältlich sind, daß man an wenigstens ein Polymerisat A, das aus

a) 50 bis 100 Gew.-% wenigstens eines Esters der Acryl- oder Methacrylsäure mit 1 bis 18 C-Atome enthaltenden einwertigen Alkoholen oder Gemischen dieser Ester (Monomere a) und

b) 0 bis 50 Gew.-% sonstigen copolymerisierbaren Monomeren (Monomer b) in polymerisierter Form aufgebaut ist,

wenigstens eine Verbindung der allgemeinen Formel I

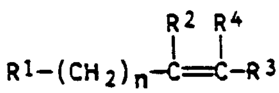 (I),

in der die Variablen folgende Bedeutung haben:

$R^1$ -OH, $-NH_2$,

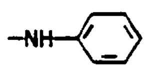,

$-NHR^3$ oder

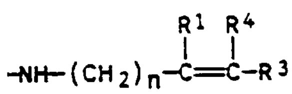

$R^2$ -H, $-CH_3$ oder $-C_2H_5$
$R^3$ -H, $C_mH_{2m+1}$ mit m = 1 bis 6,
$R^4$ -H oder $-CH_3$ und
n 1 bis 12,

über das Sauerstoff- oder Stickstoffatom des Restes $R^1$ in solchen Mengen chemisch bindet, daß das Kunstharz pro kg Polymerisat A 0,01 bis 1 Mol Doppelbindungen enthält, als Haftklebstoff nach Bestrahlung mit Elektronen oder UV-Licht.
Weiterhin betrifft die Erfindung die Herstellung dieser Kunstharze und ihre Verwendung nach Bestrahlung mit Elektronen oder ultraviolettem Licht als Haftklebstoffe für selbstklebende Artikel.

Haftklebstoffe zeichnen sich dadurch aus, daß sie eine permanente Klebrigkeit aufweisen, was die Möglichkeit zur Herstellung von selbstklebenden Artikeln eröffnet. Die Anforderungen an einen Haftklebstoff werden durch die jeweilige Anwendung bestimmt. So wird von einem insbesondere zur Herstellung von Klebebändern oder selbstklebenden Etiketten geeigneten Haftklebstoff erwartet, daß er

a) bereits nach kurzem und wenig ausgeprägtem Kontakt auf der Oberfläche des zu beklebenden Substrates haftet, d.h eine erhöhte Oberflächenklebrigkeit aufweist,

b) eine erhöhte Haftkraft (Adhäsion) auf dem zu beklebenden Substrat und

c) eine erhöhte innere Festigkeit (Kohäsion) aufweist.

Aus der DE-A 36 13 082 sind Acrylgruppen oder Methacrylgruppen tragende Polyester bekannt, die nach Bestrahlung mit Elektronen oder ultraviolettem Licht als Haftklebstoffe empfohlen werden.

Aus FR 2 009 112 sind strahlungshärtbare Polymere bekannt, welche Allylgruppen enthalten

Nachteilig an diesen Haftklebstoffen ist jedoch, daß sie nicht gleichzeitig hinsichtlich Oberflächenklebrigkeit, Adhäsion und Kohäsion voll zu befriedigen vermögen. Aufgabe der vorliegenden Erfindung war daher, Kunstharze auf der Basis ungesättigte Gruppen tragender Polymere, die nach Bestrahlung mit Elektronen oder ultraviolettem Licht als Haftklebstoffe mit gleichzeitig erhöhter Oberflächenklebrigkeit, Adhäsion und Kohäsion insbesondere zur Herstellung von Klebebändern oder selbstklebenden Etiketten geeignet sind, zur Verfügung zu stellen. Demgemäß wurden die eingangs definierten Kunstharze gefunden.

Als Monomere a sind insbesondere die Ester der Acryl- und Methacrylsäure mit 1 bis 12 C-Atome enthaltenden Alkanolen wie Methanol, Ethanol, n-Butanol, iso-Butanol, tert.-Butanol, 3-Methylbutanol-(1)(iso-Amylalkohol), n-Pentanol, n-Heptanol, 2-Ethylhexanol-(1), n-Octanol sowie iso-Octanol von Interesse. Ferner kommen die Ester der Acryl- und Methacrylsäure mit cyclischen einwertigen Alkoholen wie Cyclohexanol, tert.-Butylcyclohexanol, Tetrahydrofurfurylalkohol oder Isoborneol als Monomere a in Betracht. Bezogen auf die insgesamt in das Polymerisat A einpolymerisierten Monomeren a, enthält das Polymerisat A vorzugsweise zu 5 mehr als 50 Gew.-% Ester der Acryl- und Methacrylsäure mit nicht tertiären, mehr als drei C-Atome enthaltenden Alkanolen einpolymerisiert. Besonders bevorzugt sind die Acryl- und Methacrylsäureester des n-Butanols sowie des 2-Ethylhexanols-(1). Als Acryl- und Methacrylsäureester eines Alkanols mit weniger als 3 C-Atomen enthält das Polymerisat A vorzugsweise die Ester der Acryl- und Methacrylsäure mit Methanol einpolymerisiert.

Erfindungsgemäße Kunstharze, die nach Bestrahlung mit ultraviolettem Licht in vorteilhafter Weise als Haftklebstoffe geeignet sind, enthalten als wenigstens ein Monomeres b wenigstens ein monoethylenisch ungesättigtes Acetophenon- oder Benzophenonderivat, das keine Phenylgruppe mit einer freien Hydroxylgruppe in ortho-Position zur Carbonylgruppe des Phenongrundkörpers aufweist, oder Gemische solcher Acetophenon- und Benzophenonderivate einpolymerisiert (Monomere b1). Geeignete Monomere b1 sind u.a. Verbindunqen der allgemeinen Formel II

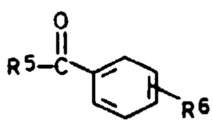 (II),

in der die Variablen folgende Bedeutung haben:

$R^5$ $-CH_3$ oder $-C_6H_5$ und
$R^6$

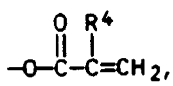

in Betracht. Bevorzugt sind Verbindungen II, in denen $R^5$ die Phenylgruppe ist und $R^6$ sich in para-Position zur Carbonylgruppe des Phenongrundkörpers befindet.

Außerdem kommen als Monomere b1 Verbindungen der allgemeinen Formel III

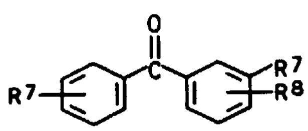 (III),

in der die Variablen folgende Bedeutung haben:

$R^7$ -H oder $-C_nH_{2n+1}$ mit n = 1 bis 4,
$R^8$ $-O-R^9$ oder

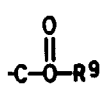

und
$R^9$

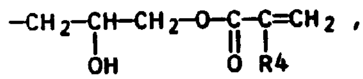

in Betracht. Vorzugsweise werden die Verbindungen III eingesetzt, in denen $R^8$ die Estergruppierung ist und sich in para-Position zur Carbonylgruppe des Phenongrundkörpers befindet. Weiterhin eignen sich als Monomere b1 Verbindungen der allgemeinen Formel IV

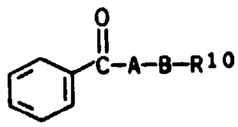

(IV)

sowie Verbindungen der allgemeinen Formel V

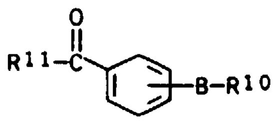

(V),

in denen die Variablen folgende Bedeutung haben:

$R^{10}$

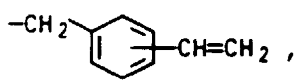

$R^{11}$ $-C_nH_{2n+1}$ mit n = 1 bis 3 oder $-C_6H_5$ ,
A gesättigte oder ungesättigte Kohlenwasserstoffkette, die verzweigt sein kann, mit 1 bis 3 C-Atomen oder ein Kohlenwasserstoffring mit 3 bis 6 C-Atomen,
B -O-,

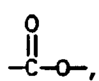, 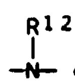 oder 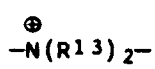 ,

$R^{12}$ -H oder $-C_nH_{2n+1}$ mit n = 1 bis 8 und
$R^{13}$ $-C_nH_{2n+1}$ mit n = 1 bis 4.

Ferner eignen sich als Monomere b1 Verbindungen der allgemeinen Formel VI

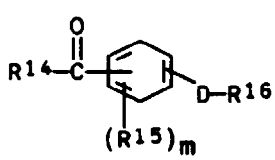

(VI),

in der die Variablen folgende Bedeutung haben:

$R^{14}$ eine niedere Alkyl- oder die Phenylgruppe, wobei die Wasserstoffatome der Phenylgruppe ein- oder mehrfach durch Halogenatome, niedere Alkoxy- oder durch die Hydroxylgruppe mit der Maßgabe substituiert sein können, daß kein in ortho-Position zur Carbonylgruppe des Phenongrundkörpers befindliches Wasserstoffatom der Phenylgruppe durch eine Hydroxylgruppe ersetzt wird,

$R^{15}$ Halogenatome, niedere Alkoxygruppen und/oder die Hydroxylgruppe, mit der Maßgabe, daß sich im Fall der Hydroxylgruppe $R^{15}$ nicht in ortho-Position zur Carbonylgruppe des Phenongrundkörpers befindet,

m 0 bis 4,

D -O-,

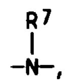

eine oxyalkylenoxy-Kette, eine carbamoylalkylenoxy-Kette oder eine alkylenoxy-Kette und

$R^{16}$ eine Alkenyl- oder eine ω-Carboxylalkenylgruppe.

Mit Vorteil werden als Monomere bI auch Verbindungen der allgemeinen Formel VII

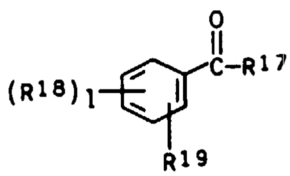

(VII),

in der die Variablen folgende Bedeutung haben:

$R^{17}$ $R^{11}$, oder eine Phenylgruppe, innerhalb der bis zu 1-Wasserstoffatome durch $R^{18}$ ersetzt sein können,

l 0 bis 4,

$R^{18}$ -H, $-CF_3$, -O-Alkyl und/oder Alkyl-COO- mit jeweils 1 bis 4 C-Atomen in der Alkylgruppe, Halogen, -CN, -COOH oder eine zur Carbonylgruppe des Phenongrundkörpers nicht ortho-ständige -OH-Gruppe,

$R^{19}$ eine Gruppe der allgemeinen Formel VIII

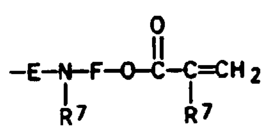

(VIII),

in der die Variablen folgende Bedeutung haben:

E

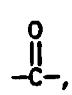

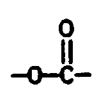

oder

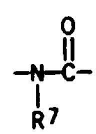

und

F eine 2 bis 12 C-Atome aufweisende Kohlenwasserstoffkette, die ein- oder mehrfach durch Sauerstoffatome unterbrochen sein kann,

eingebaut. Bevorzugte Verbindungen VII sind der Acryl- und Methacrylsäureester des Alkohols folgender Struktur

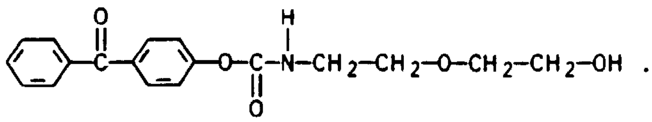.

Besonders bevorzugte Monomere b1 sind jedoch Verbindungen der allgemeinen Formel IX

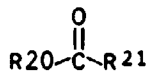 (IX),

in der die Variablen folgende Bedeutung haben:

$R^{20}$ eine 1 bis 3 C-Atome enthaltende lineare Alkylgruppe, eine 3 oder 4 C-Atome enthaltende Alkylgruppe deren Wasserstoffatome ein- oder mehrfach durch Halogenatome ersetzt sein können, eine Arylgruppe oder $R^{21}$

$R^{21}$

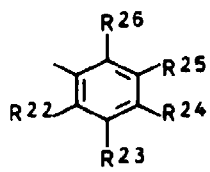

$R^{22}$ bis $R^{25}$ unabhängig voneinander $R^7$, -OH (das zur Carbonylgruppe des Phenongrundkörpers nicht ortho-ständig sein darf), $-OCH_3$, $-OC_2H_5$, -SH, $-SCH_3$, -Cl, -F, -CN, -COOH, -COO-Alkyl mit 1 bis 3 C-Atomen in der Alkylgruppe, $-CF_3$, $-N(CH_3)_2$, $-N(C_2H_5)_2$, $-N(CH_3)C_6H_5$, $-N^{\oplus}(CH_3)_3X^-$, $-N^{\oplus}(CH_3)_2X^-$ wobei $X^-$ ein Säureanion wie $Cl^{\ominus}$, $Br^{\ominus}$, $CH_3COO^{\ominus}$, $HSO_4^{\ominus}$ , $H_2PO_4^{\ominus}$ oder $NO_3^{\ominus}$ sein kann, mit der Maßgabe, daß wenigstens einer der Reste $R^{22}$ bis $R^{26}$ für einen Rest der allgemeinen Formel X

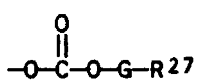 (X)

steht, in der die Variablen folgende Bedeutung haben:

$R^{27}$

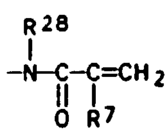, 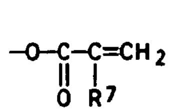 oder 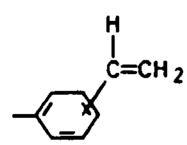,

$R^{28}$ $R^5$ oder $R^7$,

G

$$-\left[(-(K)_i-J-)_j-(K)_k\right]- \quad \text{und/oder} \quad -\left[(-(K)_i-J-)_j-(K)_k-J-)_h\right]-$$

K eine Alkylengruppe deren Wasserstoffatome ein- oder mehrfach durch Halogenatome substituiert sein können, eine 5 bis 10 C-Atome enthaltende Cycloalkylengruppe oder eine Phenylen gruppe,

J -O-, -S-,

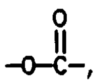, 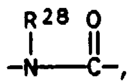, 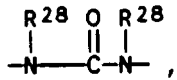, 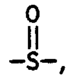, 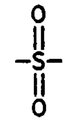 und 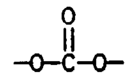

| | |
|---|---|
| i,k | 1 bis 10 und |
| j,h | 0 bis 25, |

wobei innerhalb der Verbindungen IX die Monomeren

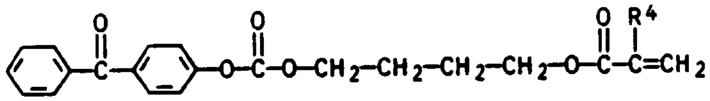 ,

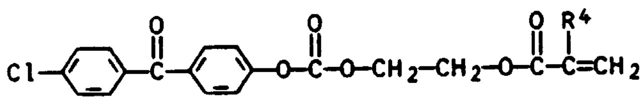

sowie

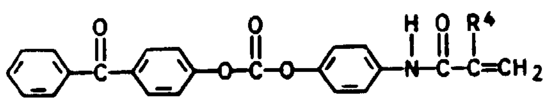

bevorzugt werden.

Ferner kommen als Monomere b1 Verbindungen der allgemeinen Formel XI

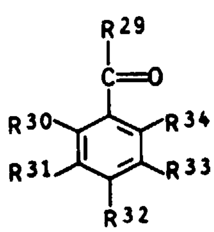 (XI),

in der die Variablen folgende Bedeutung haben:

| | |
|---|---|
| $R^{29}$ | eine 1 bis 4 C-Atome enthaltende Alkylgruppe, einen Cyclopropyl-, -pentyl- oder -hexylrest, die Phenylgruppe oder eine Phenylgruppe, deren Wasserstoffatome teilweise oder vollständig durch Reste $R^{32}$ ersetzt sind, wobei nicht mehr als zwei Substituenten $R^{32}$ identisch sind, sowie $R^{29}$ gemeinsam mit $R^{30}$ oder gemeinsam mit $R^{34}$ eine $-CH_2-CH_2-$ oder $-CH_2-CH_2-CH_2-$Brücke, |
| $R^{32}$ | eine 1 bis 24 C-Atome enthaltende Alkylgruppe, -OH, $-O-R^{35}$, $-S-R^{35}$, |

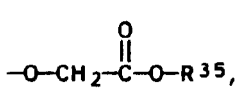, 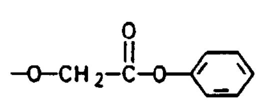,

$-O-CH_2-C\equiv N$, $-O-CH_2-COOH$,

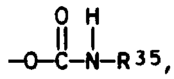, 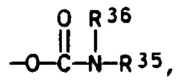, 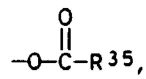,

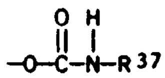 oder 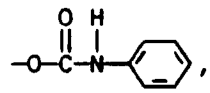,

| | |
|---|---|
| $R^{30}$ oder $R^{34}$ | für den Fall, daß $R^{29}$ eine Arylgruppe ist, eine direkte Bindung an $R^{30}$ in ortho-Stellung zur Carbonylgruppe, oder unabhängig voneinander beide einen der Reste $R^{32}$, und |
| $R^{31}$, $R^{33}$ | einen der Reste $R^{32}$ oder eine Gruppe der allgemeinen Formel XII |

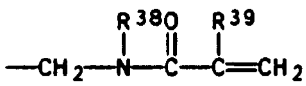 (XII),

wobei

| | |
|---|---|
| $R^{35}$, $R^{36}$ | eine 1 bis 4 C-Atome enthaltende Alkylgruppe, |
| $R^{37}$ | eine 5 oder 6 C-Atome enthaltende Cycloalkylgruppe, |
| $R^{38}$ | Wasserstoff oder eine 1 bis 4 C-Atome enthaltende Alkylgruppe und |
| $R^{39}$ | Wasserstoff oder eine 1 bis 4 C-Atome enthaltende Alkylgruppe bedeuten, |

mit der Maßgabe, daß entweder $R^{31}$ oder $R^{33}$ eine Gruppe der allgemeinen Formel XII ist, in Betracht.

Die Verbindungen der allgemeinen Formeln II bis VII sowie der allgemeinen Formel IX sind bekannt und z.B. in den Schriften US 3 214 492 (Verbindungen II), US 3 429 852 (Verbindungen III), DE-A 28 18 763 (Verbindungen IV und V), EP-A 246 848 (Verbindungen VI), in der älteren Schrift P 38 20 463.0 (Verbindungen VII) und in der älteren Schrift P 3844444.5 (Verbindungen IX) beschrieben.

Die Monomeren b1 der allgemeinen Formel XI sind in der Regel in einfacher Weise erhältlich durch Umsetzen einer Verbindung der allgemeinen Formel XIII

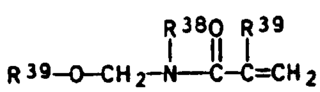 (XIII),

mit einer Verbindung der allgemeinen Formel XIV

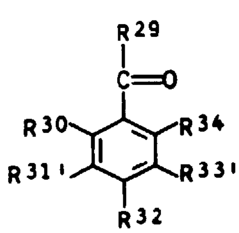 (XIV),

in der einer der Reste $R^{31'}$ oder $R^{33'}$ Wasserstoff und der andere ein Rest $R^{32}$ ist.

Die Umsetzung folgt dem allgemeinen Reaktionsschema XV

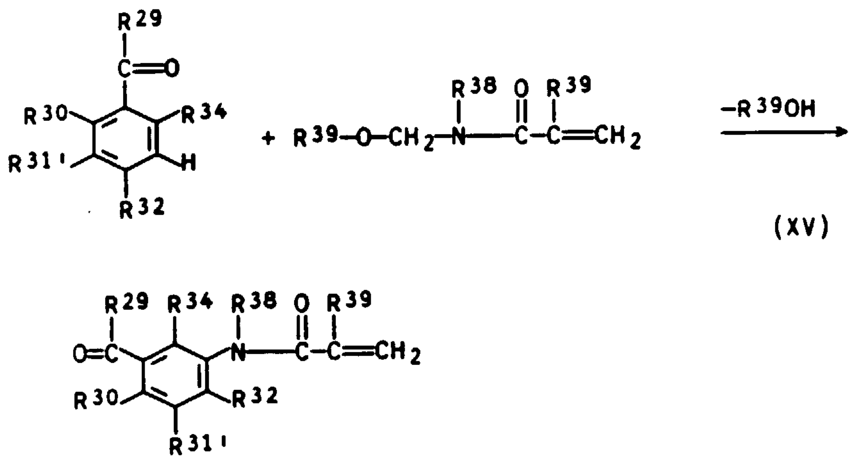


(XV)

Dieser Reaktionstyp ist als "Amidomethylierung" in der Literatur bekannt und die zugehörigen Reaktionsbedingungen sind u.a. in den folgenden Quellen vorbeschrieben:

- H. Hellmann, G. Aichinger und P. Wiedemann, J. Liebigs Ann. Chemie 626, S. 35 (1959)
- H. E. Zang, W.B. Martin, Organic Reactions 14, S. 52 (1965)
- H.E. Zang, Synthesis S. 49 (1970).

In der Regel werden die Verbindungen XIII und XIV in äquimolaren Mengen eingesetzt. Eine detaillierte Beschreibung der Verbindungen XI und ihrer Herstellung enthält u.a. die ältere Schrift P 4 007 318.1.

Vorzugsweise enthalten die erfindungsgemäßen Kunstharze, bezogen auf das Polymerisat A, 0,05 bis 5, besonders bevorzugt 0,25 bis 2 Gew.-% der Monomeren b1 einpolymerisiert, wobei innerhalb der genannten Gesamtmenge der Monomeren b1 die nachfolgenden Verbindungen in ganz besonderer Weise bevorzugt sind:

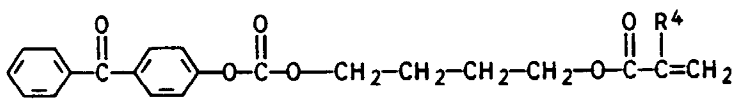

und

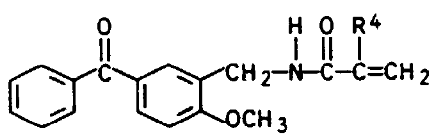

Kunstharze, die lediglich der Anforderung genügen, nach Bestrahlung mit Elektronen in vorteilhafter Weise als Haftklebstoffe geeignet zu sein, enthalten nicht notwendigerweise Monomere b1 in A einpolymerisiert.

Zur Gruppe der Monomeren b gehören vorzugsweise auch 3 bis 6 C-Atome enthaltende monoethylenisch ungesättigte ein- oder zweibasische Säuren (Monomeren b2). Beispiele hierfür sind Sulfonsäuren wie Vinylsulfonsäure oder 2-Acrylamido-2-methyl-propan-sulfonsäure sowie Phosphonsäuren wie Vinylphosphonsäure. Bevorzugt werden als Monomere b2 jedoch Mono- und/oder Dicarbonsäuren einpolymerisiert. Beispiele hierfür sind Acrylsäure, Methacrylsäure, Maleinsäure, Fumarsäure und Itaconsäure. Ferner eignen sich als Monomere b2 die Monoester dieser monoethylenisch ungesättigten Dicarbonsäuren mit 1 bis 7 C-Atome enthaltenden Alkanolen, sowie die entsprechenden Halbamide mit 1 bis 7 C-Atome enthaltenden aliphatischen Aminen. Vorzugsweise enthalten die Polymerisate A 0,05 bis 6, besonders bevorzugt 0,1 bis 4 Gew.-% an Monomeren b2 einpolymerisiert. Die Mitverwendung von Monomeren b2 wirkt sich insbesondere vorteilhaft auf Adhäsion und Kohäsion der erfindungsgemäßen Haftklebstoffe aus.

In bemerkenswert einfacher Weise sind die Kunstharze herstellbar, wenn die Polymerisate A cyclische Anhydride 4 bis 8 C-Atome enthaltender monoethylenisch ungesättigter Dicarbonsäuren wie Maleinsäureanhydrid oder Itaconsäureanhydrid einpolymerisiert enthalten (Monomere b3). In der Regel beschränkt sich in diesen Fällen der Herstellungsprozeß auf das Einrühren der Verbindungen I, insbesondere im Fall von Aminfunktionen enthaltenden Verbindungen I, in eine Lösung der Polymerisate A, wobei im allgemeinen Kunstharze erhalten werden, die durch eine erhöhte Wärmestabilität der chemischen Bindung der Verbindungen I an das Polymerisat A gekennzeichnet sind. Besonders vorteilhaft wirkt sich die Einpolymerisation von Maleinsäureanhydrid aus. Vorzugsweise enthalten die Polymerisate A 0,1 bis 10, besonders bevorzugt 1 bis 5 Gew.-% Monomere b3 einpolymerisiert.

Ferner eignen sich als Monomere b Vinylester 2 bis 18 C-Atome enthaltender aliphatischer Carbonsäuren wie Vinylacetat, Vinylpropionat, Vinyllaurat und Vinylstearat, vinylaromatische Verbindungen wie Styrol, $\alpha$-Methylstyrol oder Vinyltoluol, ungesättigte Kohlenwasserstoffe wie Ethen, Cyclohexen, Butadien oder Isopren, Stickstoff enthaltende Monomere wie Acrylamid, N-Vinylpyrrolidon oder N-Vinylcaprolactam, Vinylether wie Methylvinylether, Ethylvinylether, n-Butylvinylether,iso-Butylvinylether, 2-Ethyl-Butylvinylether, oder 2-Methylen-1,3-dioxepan, Halogen enthaltende Monomere wie Vinylchlorid oder Vinylidenchlorid, Diester niederer monoethylenisch ungesättigter Carbonsäuren mit 1 bis 10 C-Atome enthaltenden Alkanolen wie Fumarsäuredi-n-butylester, Maleinsäurediethylester oder Fumarsäuredimethylester sowie die Ester der Acryl- oder Methacrylsäure mit Glycidol.

Insgesamt werden die Anteile der das Polymerisat A konstituierenden Monomeren vorzugsweise so gewählt, daß die Glasübergangstemperatur des Polymerisats A -40°C bis 0, bevorzugt -30 bis -10°C beträgt. Nach Fox (T.G. Fox, Bull. Am. Phys. Soc. (Ser. II) 1, 123 [1956]) gilt für die Glasübergangstemperatur von Mischpolymerisaten in guter Näherung:

$$\frac{1}{Tg} = \frac{x^1}{Tg^1} + \frac{x^2}{Tg^2} + \ldots\ldots\ldots \frac{x^s}{Tg^s}$$

wobei $x^1$, $x^2$, ..., $x^s$ die Massenbrüche der Monomeren 1, 2 ..., s und $Tg^1$, $Tg^2$, ... $Tg^s$ die Glasübergangstemperaturen der jeweils nur aus einem der Monomeren 1, 2, .... oder s aufgebauten Polymeren in Kelvin bedeuten. Die Glasübergangstemperaturen der genannten Monomeren a, b sind im wesentlichen bekannt und z.B. in J. Brandrup, E.H. Immergut, Polymer Handbook 1st Ed. J. Wiley, New Jork 1966 und 2nd Ed. J. Wiley, New Jork 1975 aufgeführt.

Von den Verbindungen der allgemeinen Formel I sind diejenigen bevorzugt, die eine Aminfunktion enthalten. Beispiele hierfür sind Allylamin, N-Methylallylamin, Diallylamin, Methallylamin, N-Ethylmethallylamin, N-(2-Methylallyl) ethylamin oder N-Phenylallylamin. Besonders bevorzugt wird Allylamin verwendet. Als hydroxyfunktionelle Verbindung I kommt vorzugsweise Allylalkohol in Betracht. Mit Vorteil enthalten die erfindungsgemäßen Kunstharze pro kg Polymerisat A 0,01 bis 0,5, bevorzugt 0,01 bis 0,25 Mol Doppelbindungen in Form wenigstens einer Verbindung I. Anwendungstechnisch besonders vorteilhaft sind solche erfindungsgemäßen Kunstharze, deren Polymerisate A einerseits Monomere b3 einpolymerisiert enthalten und andererseits mit solchen Mengen wenigstens einer Verbindung I über das Sauerstoff- oder Stickstoffatom deren Restes $R^1$ chemisch verbunden sind, daß einerseits die Molzahl der chemisch gebundenen Verbindungen I wenigstens ein Zehntel der Molzahl der einpolymerisierten Monomeren b3 und andererseits die Molzahl Doppelbindungen pro kg Polymerisat A 0,01 bis 0,5, bevorzugt 0,01 bis 0,25 beträgt, wobei die Polymerisate A 0,1 bis 10 und besonders bevorzugt 1 bis 5 Gew.-%, bezogen auf die Gesamtmenge der einpolymerisierten Monomeren a und b, an Monomeren b3 einpolymerisiert enthalten. Ein Maß für die Menge von in den erfindungsgemäßen Kunstharzen chemisch gebundenen Verbindungen I ist deren nach DIN 53 241 zu bestimmende Hydrierjodzahl (HIZ). Sie ist definiert als diejenige Menge Jod in Gramm, die derjenigen Menge Wasserstoff äquivalent ist, die gemäß DIN 53 241 von 100 g Kunstharz chemisch gebunden werden.

Die Herstellung der Kunstharze erfolgt zweckmäßigerweise in zwei Stufen. In der ersten Stufe stellt man in an sich bekannter Weise durch radikalische Polymerisation der Monomeren a und b, vorzugsweise in Lösung, das wenigstens eine Polymerisat A her, das anschließend mit den Verbindungen I umgesetzt wird.

Als Polymerisationsinitiatoren für die radikalische Lösungspolymerisation eignen sich u.a. Hydroperoxide wie Cumolhydroperoxid oder tert.-Butylhydroperoxid, Dialkylperoxide wie Dicumylperoxid oder Di-tert.-butylperoxid sowie Azoverbindungen wie 2,2'-Azobisisobutyronitril, 2,2'-Azobis(methylisobutyrat) oder 2,2'-Azobis(2,4-dimethylvaleronitril). Bezogen auf die Gesamtmenge der zu polymerisierenden Monomeren werden die Polymerisationsinitiatoren in der Regel in Mengen von 0,1 bis 10 Gew.-% eingesetzt. Im Rahmen der Lösungspolymerisation können auch Molekulargewichtsregler, z.B. Mercaptane wie Mercaptobernsteinsäure oder Mercaptoethanol, oder Verbindungen wie Bromoform oder Tetrachlorkohlenstoff, mitverwendet werden. Geeignete Lösungsmittel sind u.a. Essigsäureethylester, Essigsäure-n-butylester, Aceton, Methylethylketon, Toluol, Benzol, Xylol, Tetrahydrofuran, Benzine oder Cyclohexan. Vorzugsweise beträgt der Siedepunkt der Lösungsmittel 50 bis 150°C. Die Polymerisationstemperatur beträgt im allgemeinen 20 bis 150, vorzugsweise 60 bis 90°C. Die Lösungspolymerisation kann sowohl als Chargenprozeß als auch in Form eines Zulaufverfahrens durchgeführt werden. Bevorzugt ist das Zulaufverfahren, bei dem man einen Teil des Polymerisationsansatzes vorlegt, auf die Polymerisationstemperatur erhitzt und anschließend den Rest, gegebenenfalls in getrennten Zuläufen, kontinuierlich zuführt. In einer besonders bevorzugten Variante des Zulaufverfahrens enthält die Vorlage keine oder nur einen Teil der einzupolymerisierenden Monomeren b3. Die Restmenge der Monomeren

b3 wird in einem Teil der übrigen Monomeren oder in einem Teil des Lösungsmittels gelöst und über einen separaten Zulauf wenigstens zeitgleich oder schneller als die anderen verbliebenen Monomeren der Vorlage zugeführt. Üblicherweise weisen die Polymerisate A bei 25°C in Tetrahydrofuran (THF) einen K-Wert von 20 bis 70, vorzugsweise von 30 bis 50, auf. Der K-Wert ist eine relative Viskositätszahl, die in Analogie zur DIN 53726 bestimmt wird. Gemessen wird hierbei die Fließgeschwindigkeit einer 1 gew.-%igen Lösung des Polymerisats A in THF, relativ zur Fließgeschwindigkeit von reinem THF. Er charakterisiert den mittleren Polymerisationsgrad des Polymerisats.

Die Umsetzung der Polymerisate A mit den Verbindungen I erfolgt zweckmäßigerweise dadurch, daß man die Verbindungen I, vorzugsweise in Lösung befindlich, in die Polymerisate A, vorzugsweise ebenfalls in Lösung befindlich, bei Temperaturen von 20 bis 150°C und gegebenenfalls Drücken bis 100 bar, einrührt und das Reaktionsgemisch unter Rühren einige Zeit sich selbst überläßt. In der Regel ist die üblicherweise exotherme Reaktion nach wenigen Stunden beendet. Als Lösungsmittel können normalerweise die gleichen Mittel eingesetzt werden, die auch für die Lösungspolymerisation geeignet sind.

Durch Zugabe katalytisch wirksamer Mengen protischer Säuren wie Schwefelsäure, Essigsäure oder Phosphorsäure, kann die Umsetzung der Polymerisate A mit den Verbindungen I beschleunigt werden. Das wenigstens eine Polymerisat A und die wenigstens eine Verbindung I werden in der Regel in stöchiometrischen Mengen eingesetzt.

Wesentliche Voraussetzung für die Umsetzung der Polymerisate A mit den Verbindungen I ist jedoch, daß das Reaktionsmedium keine Restmengen an von der Herstellung der Polymerisate A verbliebenen Polymerisationsinitiatoren enthält. Zweckmäßigerweise werden daher im Anschluß an die zur Herstellung der Polymerisate A durchgeführte radikalische Polymerisation diese Restinitiatoren entfernt. Dies kann in an sich bekannter Weise, z.B. durch Nachpolymerisieren, gegebenenfalls bei erhöhten Temperaturen und erhöhtem Druck, oder durch Zugabe von geeigneten chemischen Mitteln, z.B. Reduktionsmittel wie Ascorbinsäure im Falle von als Initiatoren verwendeten Peroxiden, erfolgen. Enthalten die Polymerisate A Monomere b3 einpolymerisiert, werden die Verbindungen I, bezogen auf die Molzahl der in den Polymerisaten A einpolymerisiert enthaltenen Monomeren b3, vorzugsweise im molaren Unterschuß eingesetzt. In diesen Fällen können als Modifizierung die bei der Umsetzung verbliebenen cyclischen Anhydridgruppen durch Zugabe von gesättigten Alkoholen, gesättigten Aminen oder Wasser geöffnet werden. Wurden die Polymerisate A mit Verbindungen I umgesetzt, die eine primäre Aminfunktion enthalten, ist es zweckmäßig, im Anschluß, vorzugsweise nach Entfernen des Lösungsmittels, dem Reaktionsmedium wasserbindende Mittel wie Essigsäureanhydrid zuzugeben und das Gemisch für einige Stunden bei erhöhter Temperatur, vorzugsweise 100 bis 140°C, zu halten. Dadurch wird in der Regel die Aminfunktion in eine Imidfunktion überführt, was im allgemeinen die innere Festigkeit der erfindungsgemäßen Kunstharze erhöht.

Abschließend werden gewöhnlich von den Kunstharzen, vorzugsweise bei reduziertem Druck und gegebenenfalls erhöhter Temperatur, flüchtige Bestandteile, z.B. das Lösungsmittel, abgetrennt.

Die Kunstharze eignen sich nach ultravioletter Bestrahlung (wenn sie Monomere b1 einpolymerisiert enthalten) oder nach Bestrahlung mit Elektronen als Haftklebstoffe, die gleichzeitig eine erhöhte Oberflächenklebrigkeit, Adhäsion und Kohäsion aufweisen und insbesondere zur Herstellung von selbstklebenden Artikeln (die ganz allgemein aus einem Trägermaterial und einem Haftklebstoff bestehen), vorzugsweise Klebebänder oder Etiketten, geeignet sind.

Je nach Anwendungsfall werden die Trägermaterialien aus unterschiedlichen Substraten ausgewählt. Geeignet sind u.a. textile Gewebe, Papiere, Kunststoff-Folien aus Polyvinylchlorid, Polyester wie Polyethylenglycolterephthalat, Celluloseacetat, Polypropylen, Metallfolien aus Aluminium, Kupfer oder Blei, aber auch Schaumstoffe aus Polyurethan, Polyvinylchlorid, Polyethylen sowie Polychloropren.

Die Applikation der Kunstharze erfolgt vorzugsweise vor der Bestrahlung mit ultraviolettem Licht. Sie kann aus organischer Lösung, bevorzugt einen Feststoffgehalt von 50 bis 80 Gew.-% aufweisend, oder aus der Schmelze erfolgen, wobei im Falle der Verwendung organischer Lösungen der erfindungsgemäßen Kunstharze das Lösungsmittel nach dem Beschichten der Trägermaterialoberfläche im allgemeinen mittels Wärme ausgetrieben wird. Gegebenenfalls kann auch aus wäßriger Sekundärdispersion appliziert werden. Vorzugsweise wird aus der Schmelze, bei Temperaturen von 80 bis 120°C, appliziert. Die Applikation kann in an sich bekannter Weise durch Streichen, Verdüsen, Walzen, Rakeln oder Gießen erfolgen.

Die Bestrahlung kann unmittelbar nach dem Auftragen, nach der Entfernung des Lösungsmittels (Applikation aus der Lösung) oder nach Durchlaufen einer Heiz-, Temper- und/oder Kühlstrecke (insbesondere bei Applikation aus der Schmelze) erfolgen.

Zum Bestrahlen mit ultraviolettem Licht können handelsübliche UV-Strahler, die vorzugsweise in einem Wellenlängenbereich von 200 bis 700 nm emittieren, eingesetzt werden. Geeignet sind beispielsweise Quecksilbermitteldruckstrahler mit einer Strahlungsleistung von 80 bis 120 W/cm, wie sie z.B. in "Sources and Application of Ultraviolett Radiation", R. Philips, Academic Press, London 1983, beschrieben werden. Die Bestrahlung mit ultraviolettem Licht erfordert keine Gegenwart von Schutzgas.

Geeignete Strahlungsquellen für Elektronen sind z.B. Elektronenstrahlgeneratoren, deren Beschleunigungsspannung zweckmäßigerweise im Bereich von 150 bis 300 kV liegt. Die Bestrahlungsdauer richtet sich nach der Dicke der Beschichtung, der Strahlungsleistung der verwendeten Strahlungsquelle und im Falle von UV-Bestrahlung nach den

jeweils einpolymerisierten Monomeren b1. Sie kann jedoch in Vorversuchen leicht ermittelt werden. Bemerkenswerterweise ist die zum Erreichen der vorteilhaften Haftklebeeigenschaften erforderliche Strahlungsdosis, insbesondere bei Bestrahlung mit Elektronen, relativ klein. In der Regel beträgt sie bei Bestrahlung mit Elektronen 1 bis 5 Mrad. Dies ist insbesondere dann von Vorteil, wenn dicke Klebstoffschichten erforderlich sind (Auftragsmasse als Trockengewicht bis zu 100 g/m$^2$) und erlaubt ganz generell bei vorgegebener Bestrahlungsvorrichtung eine erhöhte Produktionsgeschwindigkeit. Zu hohe Strahlungsdosen bewirken in der Regel einen Abbau der erfindungsgemaßen Kunstharze. Die erfindungsgemäßen Kunstharze können in an sich bekannter Weise modifiziert werden, indem man ihnen in Mengen von bis zu 50 Gew.-% klebrigmachende Harze (Tackifier) wie Kolophinium, Cumaron-Inden-, Terpen-, Alkylphenol-Formaldehyd- oder Alkyldharz zugibt. In untergeordnete Mengen können auch mineralische Füllstoffe, Weichmacher, polychlorierte Kohlenwasserstoffe oder Paraffinöle zugesetzt werden. Ferner können auch nicht monoethylenisch ungesättigte Acetophenon- oder Benzophenonderivate wie Benzophenon, 4-Methoxybenzophenon oder Benzophenon-2-carbonsäure eingerührt werden, wodurch auch keine Monomeren b1 einpolymerisiert enthaltende Kunstharze nach UV-Bestrahlung als Haftklebstoffe geeignet sind. Vorzugsweise werden solche externen Photoinitiatoren, bezogen auf das Gewicht der Kunstharze, in Mengen von 0,01 bis 5 Gew.-% eingerührt.

Interssanterweise verfügen die Kunstharze in Abwesenheit von UV- oder Elektronenstrahlen über eine voll befriedigende Lagerstabilität.

Beispiele

Beispiel 1

Herstellung verschiedener Polymerisate A

A1: Ein Gemisch aus 200 g Essigsäureethylester, 60 g Maleinsäureanhydrid, 4 g 2,2'-Azobis(methylisobutyrat) und 100 g eines Monomerengemisches aus 500 g n-Butylacrylat, 310 g 2-Ethylhexylacrylat, 130 g Methylacrylat und 6,5 g der Benzophenonverbindung

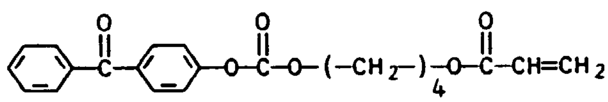

wurde 10 min auf die Polymerisationstemperatur von 80°C erwärmt. Anschließend wurden unter Aufrechterhaltung der Polymerisationstemperatur der Rest des Monomerengemisches und eine Lösung von 10 g 2,2'-Azobis (methylisobutyrat) in 100 g Essigsäureethylester während 4 h kontinuierlich zugesetzt. Dann wurde das Gemisch zunächst weitere 4 h bei 80°C gehalten und danach das Lösungsmittel unter Normaldruck bei ca. 130°C abdestilliert. Der K-Wert des erhaltenen Polymerisates A1 (25°C, THF) betrug 43.

A2: Ein Gemisch aus 300 g Essigsäureethylester, 3 g 2,2'-Azobis(methylisobutyrat), 120 g einer Monomerenmischung I, bestehend aus 990 g iso-Amylacrylat, 195 g Methylacrylat und 11,3 g der Benzophenonverbindung aus A1, und 40 g einer Monomerenmischung II, bestehend aus 60 g Maleinsäureanhydrid und 255 g iso-Amylacrylat, wurde 10 min auf die Polymerisationstemperatur von 80°C erwärmt. Anschließend wurden unter Aufrechterhaltung der Polymerisationstemperatur der Rest des Monomerengemisches I (während 4 h), der Rest des Monomerengemisches II (während 3 h) und eine Lösung von 18 g 2,2'-Azobis(methylisobutyrat) in 100 g Essigsäureethylester (während 2 h) kontinuierlich zugesetzt. Dann wurde das Gemisch zunächst weitere 4 h bei 80°C gehalten und danach das Lösungsmittel unter Normaldruck bei ca. 130°C abdestilliert. Der K-Wert des erhaltenen Polymerisats A2 (25°C, THF) betrug 43,9.

A3: Wie A1, das Monomerengemisch bestand jedoch aus 830 g iso-Amylacrylat, 40 g Maleinsäureanhydrid, 130 g Methylacrylat und 6,5 g der Benzophenonverbindung

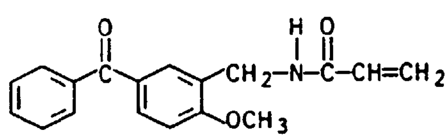

Der K-Wert des erhaltenen Polymerisats A3 (25°C, THF) betrug 41,7.

A4: Ein Gemisch aus 400 g Essigsäureethylester, 8 g 2,2'-Azobis(methylisobutyrat), 160 g einer Monomerenmischung I, bestehend aus 1320 g iso-Amylacrylat und 260 g Methylacrylat und 40 g einer Monomerenmischung II, bestehend aus 80 g Maleinsäureanhydrid und 340 g iso-Amylacrylat, wurde 10 min auf die Polymerisationstemperatur von 80°C erwärmt. Anschließend wurden unter Aufrechterhaltung der Polymerisationstemperatur der Rest des Monomerengemisches I (während 4 h), der des Monomerengemisches II (während 3 h) und eine Lösung von 20 g 2,2'-Azobis(methylisobutyrat) in 100 g Essigsäureethylester (während 2 h) kontinuierlich zugesetzt. Dann wurde das Gemisch zunächst weitere 4 h bei 80°C gehalten und danach das Lösungsmittel unter Normaldruck bei ca. 130°C abdestilliert. Der K-Wert des erhaltenen Polymerisats A4 (25°C, THF) betrug 41.

A5: Ein Gemisch aus 200 g Toluol, 4 g 2,2'-Azobis(methylisobutyrat) und 100 g eines Monomerengemisches aus 500 g 2-Ethylhexylacrylat, 300 g n-Butylacrylat, 130 g Methylacrylat, 20 g Acrylsäure und 6,5 g der Benzophenonverbindung

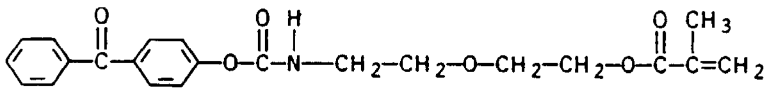

wurde 10 min auf die Polymerisationstemperatur von 80°C erwärmt. Anschließend wurden unter Aufrechterhaltung der Polymerisationstemperatur der Rest des Monomerengemisches und eine Lösung von 10 g 2,2'-Azobis (methylisobutyrat) in 100 g Toluol während 2 h kontinuierlich zugesetzt. Dann wurde das Gemisch zunächst weitere 4 h bei 80°C gehalten und danach das Lösungsmittel unter Normaldruck bei ca. 130°C abdestilliert. Der K-Wert des erhaltenen Polymerisats A5 (25°C, THF) betrug 43.

Beispiel 2

Herstellung verschiedener erfindungsgemäßer Kunstharze aus Polymerisaten A des Beispiels 1

K1: Die Gesamtmenge an in Beispiel 1 hergestelltem A1 wurde in 200 g Toluol gelöst und bei 45°C während 1 h kontinuierlich mit einer Lösung von 23,3 g Allylamin in 200 g Toluol versetzt. Anschließend wurde das Gemisch noch 4 h bei ca. 50°C gehalten und danach bei reduziertem Druck die flüchtigen Bestandteile entfernt. Es wurde ein bei Raumtemperatur fließfähiges Kunstharz K1 erhalten.

K2: Die gebildete Gesamtmenge an K1 wurde mit 60 g Essigsäureanhydrid versetzt und während 6 h bei 120°C gehalten. Anschließend wurden die flüchtigen Bestandteile bei reduziertem Druck entfernt.

K3: Wie K1, jedoch wurde von A2 ausgegangen und bezogen auf 1 kg A2 mit 5,8 g Allylamin umgesetzt.

K4: Wie K3, jedoch wurde bezogen auf 1 kg A2 mit 11,7 g Allylamin umgesetzt.

K5: Wie K3, jedoch wurde bezogen auf 1 kg A2 mit 17,5 g Allylamin umgesetzt.

K6: Eine Lösung von 1 kg A5 in 250 g Essigsäureethylester wurde bei 45°C mit 8,73 g Allylamin versetzt und anschließend das Gemisch noch 4 h bei 50°C gehalten und danach bei reduziertem Druck die flüchtigen Bestandteile entfernt. Es wurde ein bei Raumtemperatur fließfähiges Kunstharz K6 einer Hydrierjodzahl von 3,9 g Jod/100 g K6 erhalten.

K7 Wie K6, es wurde jedoch mit 14,56 g Allylamin umgesetzt. Die Hydrierjodzahl betrug 6,4 g Jod/100 g K7.

K8: Wie K1, jedoch wurden 600 g eines A2 entsprechenden Polymerisats A, das jedoch im Unterschied zu A2 kein Benzophenonderivat einpolymerisiert enthielt, mit 11,7 g Allylamin umgesetzt.

K9: Wie K1, jedoch wurde die Gesamtmenge des in Beispiel 1 gebildeten A3 mit 17,5 g Allylamin umgesetzt.

Beispiel 3

Prüfung der Haftklebeeigenschaften verschiedener Kunstharze aus Beispiel 2, nach Bestrahlung mit ultraviolettem Licht oder mit Elektronen

a) Herstellung der Prüfstreifen

Zur Herstellung der Prüfstreifen wurden die erfindungsgemäßen Kunstharze K aus ihrer Schmelze in einer Schichtdicke von 25 g/$m^2$ oder von 100 g/$m^2$ auf eine Folie aus Polyethylenglycolterephthalat (Hostaphan® RN36) aufgetragen.

Anschließend wurden die Polyesterfolien mit ultraviolettem Licht (Quecksilbermitteldruckstrahler, 80 W/cm) oder mittels Elektronen (Electron-Curtain-Generator) unterschiedlichen Strahlungsdosen ausgesetzt. Aus den so erhaltenen selbstklebenden Folien wurden Streifen von 2 cm Breite und 25 cm Länge ausgeschnitten. Die Bestrahlung mit Elektronen erfolgte im Inertgas, d.h. unter Ausschluß von Sauerstoff. Die Strahlungsdosis der UV-Strahlung wurde mit einem UVICURE UV CURIN Radiometer SIN 0588047, Fa. EIT Electronic Instrumentation und Technologie, Inc. in mJ/$cm^2$ bestimmt.

b) Prüfung der Kohäsion (Scherstandfestigkeit)

Die Prüfstreifen (a) wurden auf einer Länge von 2,5 cm, unter Anwendung eines Gewichtes der Masse 2,5 kg, auf ein chromiertes Stahlblech (V2A) aufgerollt und 24 h bei 23°C und 65 % relativer Luftfeuchtigkeit gelagert. Anschließend wurde das nicht behaftete Ende des Stahlblechs zwischen zwei Klemmbacken befestigt und das gegenüberliegende überstehende Klebeband frei hängend bei Temperaturen von 23°C oder 50°C mit einem Gewicht der Masse 2 kg oder 1 kg belastet. Maßstab für die Scherstandfestigkeit ist die Zeidauer bis zum Aufbrechen des Klebstoffilms. Die Ergebnisse zeigt die Tabelle.

c) Prüfung der Adhäsion (Schälfestigkeit)

Zur Bestimmung der Schälfestigkeit der Prüfstreifen (a) auf der Oberfläche eines Substrates, wurden diese auf einer Länge von 20 cm unter Anwendung eines Gewichtes der Masse 2,5 kg auf ein chromiertes Stahlblech (V2A) aufgerollt. Unmittelbar oder 24 h danach wurde die Kraft bestimmt, um die Prüfstreifen in einer Zugdehnungsprüfapparatur bei einem Abschälwinkel von 180°C mit einer Geschwindigkeit von 300 mm/min rückwärts abzuziehen. Die Ergebnisse enthält ebenfalls die Tabelle.

d) Bestimmung des Schlingenwertes (Oberflächenklebrigkeit)

Zur Bestimmung des Schlingenwertes wurde ein Prüfstreifen zur Schlaufe gelegt und mit einer Geschwindigkeit von 300 mm/min mit der beschichteten Seite gegen einen Prüfkörper aus chromiertem Stahl (V2A) gefahren, bis die Schlinge unter ihrem eigenen Gewicht auf der Prüffläche auflag. Dann wurde die Schlinge mit einer Geschwindigkeit von 300 mm/min wieder abgezogen. Der Schlingenwert ist die zum Abziehen benötigte Kraft. Die Ergebnisse zeigt ebenfalls die Tabelle.

BASF Aktiengesellschaft 21 890544

Tabelle

| Kunstharz | Auftragsmenge [g/m²] | Strahlung | Strahlendosis mJ·cm⁻²/Mrad | Scherstandfestigkeit [h] 2 kg, 23°C | Scherstandfestigkeit [h] 1 kg, 50°C | Schälfestigkeit [N/2 cm] sofort | Schälfestigkeit [N/2 cm] n.24h | Schlingenwert [N/2 cm] |
|---|---|---|---|---|---|---|---|---|
| K 1 | 25 | UV | 161 | > 24 | > 24 | 8,4 | 14 | 8,0 |
| K 1 | 25 | UV | 90 | > 24 | > 24 | 9,7 | 16 | 7,4 |
| K 9 | 25 | UV | 42 | > 18 | > 24 | 8,8 | 11,5 | 7,6 |
| K 5 | 100 | UV | 161 | > 10 | > 5 | 10,5 | 14,2 | 7,5 |
| K 5 | 100 | UV | 61 | > 8 | > 3 | 11,3 | 16,1 | 8,1 |
| K 8 | 25 | $e^-$ | 4 | > 24 | > 24 | 10,9 | 11,3 | 11,1 |
| K 4 | 25 | $e^-$ | 4 | > 24 | > 24 | 10,1 | 11,2 | 10,5 |
| K 2 | 100 | $e^-$ | 2 | 4 | 2 | 15,1 | 14,1 | 11,6 |
| K 2 | 100 | $e^-$ | 2,5 | 19 | 5 | 10,8 | 20,3 | 11,0 |
| K 2 | 100 | $e^-$ | 3 | > 24 | 17 | 9,5 | 14,2 | 9,7 |
| K 2 | 100 | $e^-$ | 4 | > 48 | > 24 | 10,9 | 11,3 | 11,1 |

## Patentansprüche

### Patentansprüche für folgende Vertragsstaaten : AT, BE, DE, FR, GB, IT, NL, SE

**1.** Verwendung von Kunstharzen, welche dadurch erhältlich sind, daß man an wenigstens ein Polymerisat A, das aus

a) 50 bis 100 Gew.-% wenigstens eines Esters der Acryl- oder Methacrylsäure mit 1 bis 18 C-Atome enthaltenden einwertigen Alkoholen oder Gemischen dieser Ester (Monomere a) und

b) 0 bis 50 Gew.-% sonstigen copolymerisierbaren Monomeren (Monomer b) in polymerisierter Form aufgebaut ist,

wenigstens eine Verbindung der allgemeinen Formel I

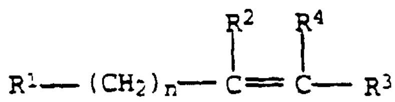

(I),

in der die Variablen folgende Bedeutung haben:

$R^1$ -OH, $-NH_2$,

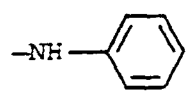

,

$-NHR^3$ oder

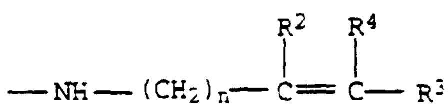

$R^2$ -H, $-CH_3$ oder $-C_2H_5$

$R^3$ -H, $-C_mH_{2m+1}$ mit m = 1 bis 6,

$R^4$ -H oder $-CH_3$ und

n 1 bis 12,

über das Sauerstoff- oder Stickstoffatom des Restes $R^1$ in solchen Mengen chemisch binden, daß das Kunstharz pro kg Polymerisat A 0,01 bis 1 Mol Doppelbindungen enthält, als Haftklebstoff nach Bestrahlung mit Elektronen oder UV-Licht.

**2.** Verwendung nach Anspruch 1, wobei das Polymerisat A aus

a) 50 bis 99,9 Gew.-% wenigstens eines Monomeren a,

b) 0,1 bis 10 Gew.-%, wenigstens eines cyclischen Anhydrids einer 4 bis 8 C-Atome enthaltenden monoethylenisch ungesättigten Dicarbonsäure (Monomere b3) und

c) 0 bis 49,9 Gew.-% sonstigen copolymerisierbaren Monomeren

in polymerisierter Form aufgebaut ist.

3. Verwendung nach Anspruch 1, wobei das Polymerisat A mit wenigstens einer Verbindung I chemisch verbunden ist, deren Rest $R^1$ eine Aminfunktion ist.

4. Verwendung nach Anspruch 1, wobei das Polylmerisat A mit Allylamin als wenigstens einer Verbindung I verbunden ist.

5. Verwendung nach Anspruch 1, wobei das Polymerisat A bei 25°C in Tetrahydrofuran einen K-Wert von 30 bis 50 aufweist.

6. Verwendung nach Anspruch 1, wobei das Polymerisat A eine Glasübergangstemperatur von -30 bis -10°C aufweist.

7. Kunstharze, dadurch gekennzeichent, daß man an wenigstens ein Polymerisat A, das aus

a) 50 bis 99,95 Gew.-% wenigstens eines Esters der Acryl- oder Methacrylsäure mit 1 bis 18 C-Atome enthaltenden einwertigen Alkoholen oder Gemischen dieser Ester (Monomere a) und

b) 0,05 bis 5 Gew.-% wenigstens eines monoethylenisch ungesättigten Acetophenon- oder Benzophenonderivates, das keine Phenylgruppe mit einer freien Hydroxylgruppe in ortho-Position zur Carbonylgruppe der Phenongrundkörper aufweist, oder eines Gemisches dieser Monomeren (Monomere b1) und

c) 0 bis 49,95 Gew.-% sonstigen copolymerisierbaren Monomeren in polymerisierten Form aufgebaut ist

wenigstens eine Verbindung der allgemeinen Formel I

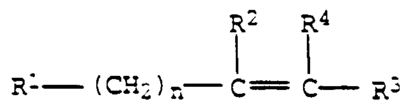 (I),

in der die Variablen folgende Bedeutung haben:

$R^1$ -OH, $-NH_2$,

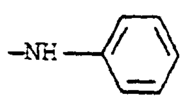 ,

$-NHR^3$ oder

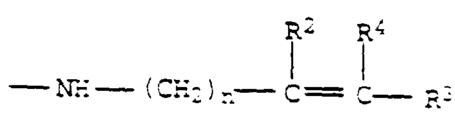

$R^2$ -H, $-CH_3$ oder $-C_2H_5$

$R^3$ -H, $-C_mH_{2m+1}$ mit m = 1 bis 6

$R^4$ -H oder $-CH_3$ und

n 1 bis 12,

über das Sauerstoff- oder Stickstoffatom des Restes $R^1$ in solchen Mengen chemisch bindet, daß das Kunstharz pro kg Polymerisat A 0,01 bis 1 Mol Doppelbindungen enthält.

**8.** Kunstharze nach Anspruch 7, deren wenigstens eines Polymerisat A aus

a) 50 bis 99,85 Gew.-% wenigstens eines Monomeren a,

b) 0,05 bis 5 Gew.-% wenigstens eines monoethylenisch ungesättigten Acetophenon- oder Benzophenonderivats, das keine Phenylgruppe mit einer freien Hydroxylgruppe in ortho-Position zur Carbonylgruppe des Phenongrundkörpers aufweist (Monomere b1)

c) 0,1 bis 10 Gew.-% wenigstens eines cyclischen Anhydrids 4 - 8 C-Atome enthaltender monoethylenisch ungesättigter Dicarbonsäuren (Monomere b3)

d) 0 bis 49,85 Gew.-% sonstigen copolymerisierbaren Monomeren in

polymerisierter Form aufgebaut ist.

**9.** Kunstharze nach Anspruch 8, deren wenigstens eines Polymerisat A aus

a) 50 bis 98,75 Gew.-% wenigstens eines Monomeren a,

b) 0,25 bis 2 Gew.-%, wenigstens eines Monomeren b1

c) 1 bis 5 Gew.-% wenigstens eines Monomeren b3) und

d) 0 bis 49,75 Gew.-% sonstigen copolymerisierbaren Monomeren in

polymerisierter Form aufgebaut und in solchen Mengen mit wenigstens einer Verbindung I über das Sauerstoff- oder Stickstoffatom deren Rechtes $R^1$ chemisch verbunden ist, daß einerseits die Molzahl der chemisch gebundenen Verbindungen I wenigstens ein Zehntel der Molzahl der einpolymerisierten Monomeren b3 und andererseits die Molzahl der Doppelbindungen pro kg A 0,01 bis 0,5 beträgt.

**10.** Kunstharze nach Anspruch 7, deren wenigstens eines Polymerisat A wenigstens eines der Monomeren

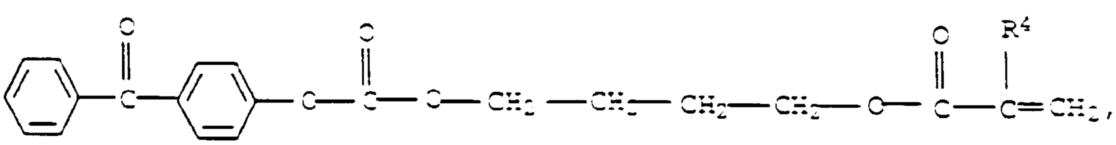

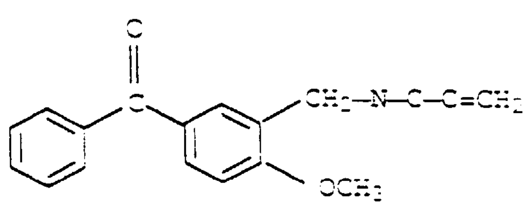

mir $R^4$ = -H oder $-CH_3$, einpolymerisiert enthält.

**11.** Selbstklebende Artikel, die aus einem Trägermaterial und einem Haftklebstoff auf der Basis von Kunstharzen gemäß den Ansprüchen 1 bis 10 bestehen.

**Patentansprüche für folgenden Vertragsstaat : ES**

1. Verwendung von Kunstharzen, welche dadurch erhältlich sind, daß man an wenigstens ein Polymerisat A, das aus

   a) 50 bis 100 Gew.-% wenigstens eines Esters der Acryl- oder Methacrylsäure mit 1 bis 18 C-Atome enthaltenden einwertigen Alkoholen oder Gemischen dieser Ester (Monomers a) und

   b) 0 bis 50 Gew.-% sonstigen copolymerisierbaren Monomeren (Monomer b) in polymerisierter Form aufgebaut ist,

   wenigstens eine Verbindung der Allgemeinen Formel I

   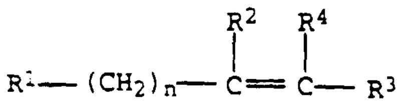 (I),

   in der die Variablen folgende Bedeutung haben:

   $R^1$ -OH, -$NH_2$,

   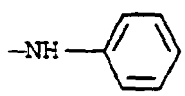 ,

   -$NHR^3$ oder

   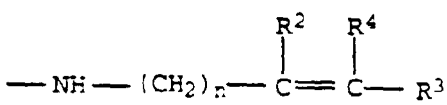

   $R^2$ -H, -$CH_3$ oder -$C_2H_5$

   $R^3$ -H, -$C_mH_{2m+1}$ mit m = 1 bis 6,

   $R^4$ -H oder -$CH_3$ und

   n 1 bis 12,

   über das Sauerstoff- oder Stickstoffatom des Restes $R^1$ in solchen Mengen chemisch binden, daß das Kunstharz pro kg Polymerisat A 0,01 bis 1 Mol Doppelbindungen enthält, als Haftklebstoff nach Bestrahlung mit Elektronen oder UV-Licht.

2. Verwendung nach Anspruch 1, wobei das Polymerisat A aus

   a) 50 bis 99,9 Gew.-% wenigstens eines Monomeren a,

   b) 0,1 bis 10 Gew.-%, wenigstens eines cyclischen Anhydrids einer 4 bis 8 C-Atome enthaltenden monoethylenisch ungesättigter Dicarbonsäure (Monomere b3) und

   c) 0 bis 49,9 Gew.-% sonstigen copolymerisierbaren Monomeren

   in polymerisierter Form aufgebaut ist.

3. Verwendung nach Anspruch 1, wobei das Polymerisat A mit wenigstens einer Verbindung I chemisch verbunden ist, deren Rest $R^1$ eine Aminfunktion ist.

4. Verwendung nach Anspruch 1, wobei das Polymerisat A mit Allylamin als wenigstens einer Verbindung I verbunden ist.

5. Verwendung nach Anspruch 1, wobei das Polymerisat A bei 25°C in Tetrahydrofuran einen K-Wert von 30 bis 50 aufweist.

6. Verwendung nach Anspruch 1, wobei das Polymerisat A eine Glasübergangstemperatur von -30 bis -10°C aufweist.

**Claims**

**Claims for the following Contracting States : AT, BE, DE, FR, GB, IT, NL, SE**

1. Use of a synthetic resin which is obtainable by chemically bonding at least one compound of the formula

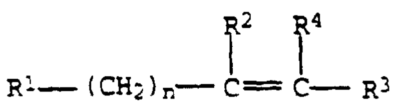

(I),

where

$R^1$ is -OH, $-NH_2$,

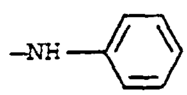

,

$-NHR^3$ or

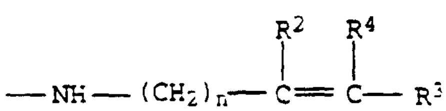

$R^2$ is -H, $-CH_3$ or $-C_2H_5$,
$R^3$ is $-C_mH_{2m+1}$, where m is from 1 to 6,
$R^4$ is -H or $-CH_3$ and
n is from 1 to 12,

or a compound selected from allylamine, N-methylallylamine, diallylamine and N-phenylallylamine via the oxygen or nitrogen atom of the radical $R^1$ to at least one polymer A which is composed of

a) from 50 to 100% by weight of at least one ester of acrylic or methacrylic acid with monohydric alcohols of 1 to 18 carbon atoms or a mixture of these esters (monomers a) and
b) from 0 to 50% by weight of other copolymerizable monomers (monomer b) in polymerized form,

in amounts such that the synthetic resin contains from 0.01 to 1 mol of double bonds per kg of polymer A, as a

contact adhesive.

**2.** Use as claimed in claim 1, wherein the polymer A is composed of

a) from 50 to 99.9% by weight of at least one monomer a,
b) from 0.1 to 10% by weight of at least one cyclic anhydride of a monoethylenically unsaturated dicarboxylic acid of 4 to 8 carbon atoms (monomer b3) and
c) from 0 to 49.9% by weight of other copolymerizable monomers

in polymerized form.

**3.** Use as claimed in claim 1, wherein the polymer A is chemically bonded to at least one compound I whose radical $R^1$ is an amine function.

**4.** Use as claimed in claim 1, wherein the polymer A is bonded to allylamine as at least one compound I.

**5.** Use as claimed in claim 1, wherein the polymer A has a K value of from 30 to 50 at 25°C in tetrahydrofuran.

**6.** Use as claimed in claim 1, wherein the polymer A has a glass transition temperature of from -30 to -10°C.

**7.** A synthetic resin obtainable by chemically bonding at least one compound of the formula I

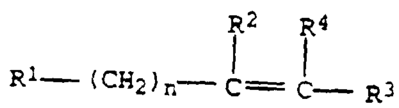

(I),

where

$R^1$ is -OH, $-NH_2$,

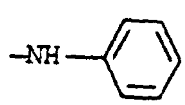

,

$-NHR^3$ or

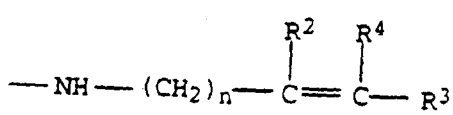

$R^2$ is -H, $-CH_3$ or $-C_2H_5$,
$R^3$ is $-C_mH_{2m+1}$, where m is from 1 to 6,
$R^4$ is -H or $-CH_3$ and
n is from 1 to 12,

or a compound selected from allylamine, N-methylallylamine, diallylamine and N-phenylallylamine via the oxygen or nitrogen atom of the radical $R^1$ to at least one polymer A which is composed of

a) from 50 to 99.95% by weight of at least one ester of acrylic or methacrylic acid with monohydric alcohols of 1 to 18 carbon atoms or a mixture of these esters (monomer a) and
b) from 0.05 to 5% by weight of at least one monoethylenically unsaturated acetophenone or benzophenone derivative which has no phenyl group with a free hydroxyl group ortho to the carbonyl group of the phenone

parent structure, or a mixture of these monomers (monomers b1), and
c) from 0 to 49.95% by weight of other copolymerizable monomers in polymerizable form,

in amounts such that the synthetic resin contains from 0.01 to 1 mol of double bonds per kg of polymer A.

**8.** A synthetic resin as claimed in claim 7, whose one or more polymers A are composed of

a) from 50 to 99.85% by weight of at least one monomer a,
b) from 0.05 to 5% by weight of at least one monomer b1,
c) from 0.1 to 10% by weight of at least one monomer b3 and
d) from 0 to 49.85% by weight of other copolymerizable monomers

in polymerized form.

**9.** A synthetic resin as claimed in claim 7, whose one or more polymers A are composed of

a) from 50 to 98.75% by weight of at least one monomer a,
b) from 0.25 to 2% by weight of at least one monomer b1,
c) from 1 to 5% by weight of at least one monomer b3 and
d) from 0 to 49.75% by weight of other copolymerizable monomers,

in polymerized form and are chemically bonded to at least one compound I via the oxygen or nitrogen atom of its radical $R^1$ in amounts such that, on the one hand, the number of moles of the chemically bonded compounds I is at least one tenth of the number of moles of the monomer b3 incorporated as polymerized units and, on the other hand, the number of moles of double bonds is from 0.01 to 0.5 per kg of A.

**10.** A synthetic resin as claimed in claim 7, whose one or more polymers A contain at least one of the monomers

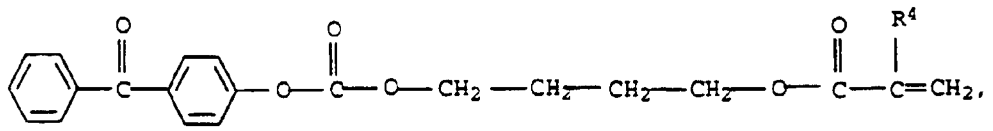

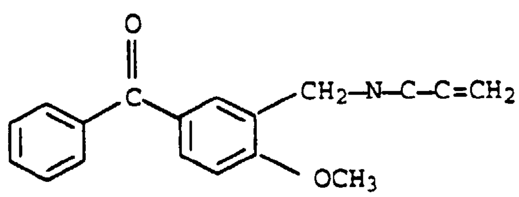

where $R^4$ is -H or -$CH_3$, as polymerized units.

**11.** A self-adhesive article which consists of a substrate and a contact adhesive based on a synthetic resin as claimed in any of claims 1 to 10.

**Claims for the following Contracting State : ES**

**1.** Use of a synthetic resin which is obtainable by chemically bonding at least one compound of the formula I

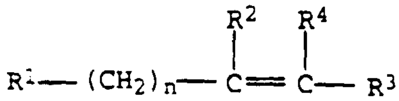

(I),

where

$R^1$ is -OH, $-NH_2$,

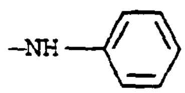

,

$-NHR^3$ or

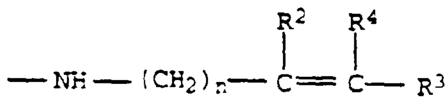

$R^2$ is -H, $-CH_3$ or $-C_2H_5$,
$R^3$ is $-C_mH_{2m+1}$, where m is from 1 to 6,
$R^4$ is -H or $-CH_3$ and
n is from 1 to 12,

or a compound selected from allylamine, N-methylallylamine, diallylamine and N-phenylallylamine via the oxygen or nitrogen atom of the radical $R^1$ to at least one polymer A which is composed of

a) from 50 to 100% by weight of at least one ester of acrylic or methacrylic acid with monohydric alcohols of 1 to 18 carbon atoms or a mixture of these esters (monomers a) and
b) from 0 to 50% by weight of other copolymerizable monomers (monomer b) in polymerized form,

in amounts such that the synthetic resin contains from 0.01 to 1 mol of double bonds per kg of polymer A, as a contact adhesive.

**2.** Use as claimed in claim 1, wherein the polymer A is composed of

a) from 50 to 99.9% by weight of at least one monomer a,
b) from 0.1 to 10% by weight of at least one cyclic anhydride of a monoethylenically unsaturated dicarboxylic acid of 4 to 8 carbon atoms (monomer b3) and
c) from 0 to 49.9% by weight of other copolymerizable monomers

in polymerized form.

**3.** Use as claimed in claim 1, wherein the polymer A is chemically bonded to at least one compound I whose radical $R^1$ is an amine function.

**4.** Use as claimed in claim 1, wherein the polymer A is bonded to allylamine as at least one compound I.

**5.** Use as claimed in claim 1, wherein the polymer A has a K value of from 30 to 50 at 25°C in tetrahydrofuran.

**6.** Use as claimed in claim 1, wherein the polymer A has a glass transition temperature of from -30 to -10°C.

## Revendications

### Revendications pour les Etats contractants suivants : AT, BE, DE, FR, GB, IT, NL, SE

**1.** Utilisation, comme masse auto-adhésive, de résines synthétiques qui sont obtenues par le fait qu'à au moins un polymère A qui se compose, sous forme polymérisée, de

a) 50 à 100% en poids d'au moins un ester de l'acide acrylique ou méthacrylique et de monoalcools contenant 1 à 18 atomes de carbone, ou de mélanges de ces esters (monomère a) et
b) 0 à 50% en poids d'autres monomères copolymérisables (monomère b),

on lie chimiquement au moins un composé de formule générale I

$$R^1-(CH_2)_n-\overset{R^2}{\overset{|}{C}}=\overset{R^4}{\overset{|}{C}}-R^3 \qquad (I)$$

dans laquelle les variables ont les significations suivantes:

$R^1$ -OH, $-NH_2$,

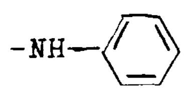 ,

$-NHR^3$ ou

$$-NH-(CH_2)_n-\overset{R^2}{\overset{|}{C}}=\overset{R^4}{\overset{|}{C}}-R^3,$$

$R^2$ -H, $-CH_3$ ou $-C_2H_5$
$R^3$ $-C_mH_{2m+1}$ avec m = 1 à 6
$R^4$ -H ou $-CH_3$ et
n 1 à 12,

ou un composé choisi parmi l'allylamine, la N-méthylallylamine, la diallylamine, la N-phénylallylamine, par l'intermédiaire de l'atome d'oxygène ou d'azote du reste $R^1$, dans des proportions telles que la résine synthétique contienne, par kg de polymère A, 0,01 à 1 mole de doubles liaisons.

**2.** Utilisation selon la revendication 1, dans laquelle le polymère A se compose, sous forme polymérisée, de

a) 50 à 99,9% en poids d'au moins un monomère a,
b) 0,1 à 10% en poids d'au moins un anhydride cyclique d'un acide dicarboxylique à insaturation monoéthylénique contenant 4 à 8 atomes de carbone (monomère b3) et
c) 0 à 49,9% en poids d'autres monomères copolymérisables,

**3.** Utilisation selon la revendication 1, dans laquelle le polymère A est lié chimiquement à au moins un composé I dont le reste $R^1$ est une fonction amine.

**4.** Utilisation selon la revendication 1, dans laquelle le polymère A est lié à de l'allylamine, en tant qu'au moins un composé I,

5. Utilisation selon la revendication 1, dans laquelle le polymère A présente, à 25°C dans du tétrahydrofuranne, une valeur K de 30 à 50.

6. Utilisation selon la revendication 1, dans laquelle le polymère A présente une température de transition vitreuse de -30 à -10°C.

7. Résines synthétiques, obtenues par le fait qu'à au moins un polymère A qui se compose, sous forme polymérisée, de

   a) 50 à 99,95% en poids d'au moins un ester de l'acide acrylique ou méthacrylique et de monoalcools contenant 1 à 18 atomes de carbone, ou de mélanges de ces esters (monomère a),
   b) 0,05 à 5% en poids d'au moins un dérivé d'acétophénone ou de benzophénone à insaturation monoéthylénique qui ne comporte pas de groupement phényle avec un groupement hydroxyle libre en position ortho par rapport au groupement carbonyle du corps phénonique de base, ou d'un mélange de ces monomères (monomère b1) et
   c) 0 à 49,95% en poids d'autres monomères copolymérisables,

   on lie chimiquement au moins un composé de formule générale I

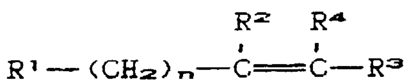 (I)

   dans laquelle les variables ont les significations suivantes:

   $R^1$ -OH, $-NH_2$,

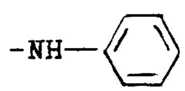 ,

   $-NHR^3$ ou

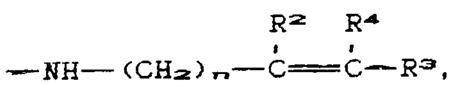 ,

   $R^2$ -H, $-CH_3$ ou $-C_2H_5$
   $R^3$ $-C_mH_{2m+1}$ avec m = 1 à 6
   $R^4$ -H ou $-CH_3$ et
   n 1 à 12,

   ou un composé choisi parmi l'allylamine, la N-méthylallylamine, la diallylamine, la N-phénylallylamine, par l'intermédiaire de l'atome d'oxygène ou d'azote du reste $R^1$, dans des proportions telles que la résine synthétique contienne, par kg de polymère A, 0,01 à 1 mole de doubles liaisons.

8. Résines synthétiques selon la revendication 7, dans lesquelles ledit polymère A au moins se compose, sous forme polymérisée, de

   a) 50 à 99,85% en poids d'au moins un monomère a,
   b) 0,05 à 5% en poids d'au moins un monomère b1,
   c) 0,1 à 10% en poids d'au moins un monomère b3 et
   d) 0 à 49,85% en poids d'autres monomères copolymérisables.

**9.** Résines synthétiques selon la revendication 7, dans lesquelles ledit polymère A au moins se compose, sous forme polymérisée, de

a) 50 à 98,75% en poids d'au moins un monomère a,
b) 0,25 à 2% en poids d'au moins un monomère b1,
c) 1 à 5% en poids d'au moins un monomère b3 et
d) 0 à 49,75% en poids d'autres monomères copolymérisables,

et est lié chimiquement à au moins un composé I par l'intermédiaire de l'atome d'oxygène ou d'azote du reste $R^1$ de celui-ci, dans des proportions telles que d'une part le nombre de moles des composés I liés chimiquement s'élève au moins à un dixième du nombre de moles des monomères b3 en liaison polymère et que, d'autre part, le nombre de moles des doubles liaisons s'élève à 0,01-0,5 par kg de A.

**10.** Résines synthétiques selon la revendication 7, dans lesquelles ledit polymère A au moins contient en liaison polymère au moins l'un des monomères

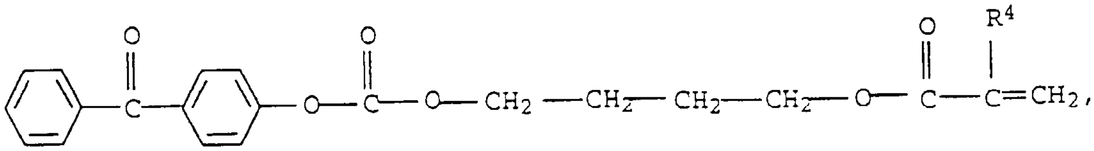

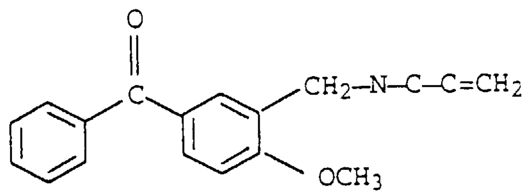

avec $R^4$ = -H ou $-CH_3$.

**11.** Articles auto-collants, qui se composent d'un matériau de support et d'une masse auto-adhésive à base de résines synthétiques selon l'une quelconque des revendications 1 à 10.

**Revendications pour l'Etat contractant suivant : ES**

**1.** Utilisation, comme masse auto-adhésive, de résines synthétiques qui sont obtenues par le fait qu'à au moins un polymère A qui se compose, sous forme polymérisée, de

a) 50 à 100% en poids d'au moins un ester de l'acide acrylique ou méthacrylique et de monoalcools contenant 1 à 18 atomes de carbone, ou de mélanges de ces esters (monomère a) et
b) 0 à 50% en poids d'autres monomères copolymérisables (monomère b),

on lie chimiquement au moins un composé de formule générale I

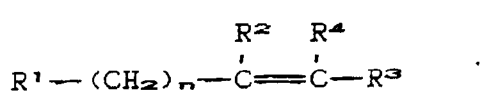 (I)

dans laquelle les variables ont les significations suivantes:

$R^1$ -OH, $-NH_2$,

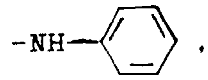

$-NHR^3$ ou

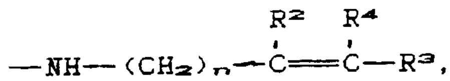

$R^2$ -H, $-CH_3$ ou $-C_2H_5$
$R^3$ $-C_mH_{2m+1}$ avec m = 1 à 6
$R^4$ -H ou $-CH_3$ et
n 1 à 12,

ou un composé choisi parmi l'allylamine, la N-méthylallylamine, la diallylamine, la N-phénylallylamine, par l'intermédiaire de l'atome d'oxygène ou d'azote du reste $R^1$, dans des proportions telles que la résine synthétique contienne, par kg de polymère A, 0,01 à 1 mole de doubles liaisons.

**2.** Utilisation selon la revendication 1, dans laquelle le polymère A se compose, sous forme polymérisée, de

a) 50 à 99,9% en poids d'au moins un monomère a,
b) 0,1 à 10% en poids d'au moins un anhydride cyclique d'un acide dicarboxylique à insaturation monoéthylénique contenant 4 à 8 atomes de carbone (monomère b3) et
c) 0 à 49,9% en poids d'autres monomères copolymérisables,

**3.** Utilisation selon la revendication 1, dans laquelle le polymère A est lié chimiquement à au moins un composé I dont le reste $R^1$ est une fonction amine.

**4.** Utilisation selon la revendication 1, dans laquelle le polymère A est lié à de l'allylamine, en tant qu'au moins un composé I,

**5.** Utilisation selon la revendication 1, dans laquelle le polymère A présente, à 25°C dans du tétrahydrofuranne, une valeur K de 30 à 50.

**6.** Utilisation selon la revendication 1, dans laquelle le polymère A présente une température de transition vitreuse de -30 à -10°C.